Europäisches Patentamt

European Patent Office

Office européen des brevets

(19)

(11) Veröffentlichungsnummer: **0 146 072**
**B1**

(12) # EUROPÄISCHE PATENTSCHRIFT

(45) Veröffentlichungstag der Patentschrift:
08.02.89

(51) Int. Cl.⁴: **H 02 B 1/04, F 16 B 37/04**

(21) Anmeldenummer: **84114689.7**

(22) Anmeldetag: **03.12.84**

(54) **Vorrichtung zum Befestigen von Bauteilen an einem Profilabschnitt, insbesondere für Schaltschränke.**

(30) Priorität: **09.12.83 DE 8335380 U**

(43) Veröffentlichungstag der Anmeldung:
**26.06.85 Patentblatt 85/26**

(45) Bekanntmachung des Hinweises auf die Patenterteilung:
**08.02.89 Patentblatt 89/6**

(84) Benannte Vertragsstaaten:
**AT BE CH DE FR GB IT LI LU NL SE**

(56) Entgegenhaltungen:
**DE-A- 1 753 038**
**DE-A- 2 257 611**
**DE-A- 2 654 239**
**FR-A- 2 420 233**
**GB-A- 597 104**

(73) Patentinhaber: **Rittal-Werk Rudolf Loh GmbH & Co. KG,
Auf dem Stützelberg, D-6348 Herborn (DE)**

(72) Erfinder: **Debus, Jürgen, Am Ebersbach 50,
D-6344 Dietzhölztal 1 (DE)**
Erfinder: **Zachrai, Jürgen, Am Hungersberg,
D-6341 Dillenburg 8 (DE)**
Erfinder: **Koch, Hans-Georg, Sonnenstrasse 28,
D-6344 Dietzhölztal 1 (DE)**
Erfinder: **Bütergerds, Helmut, Jahnstrasse 12,
D-6345 Eschenburg 1 (DE)**

(74) Vertreter: **Vogel, Georg, Hermann-Essig-Strasse 35,
D-7141 Schwieberdingen (DE)**

EP 0 146 072 B1

ACTORUM AG

**Beschreibung**

Die Erfindung betrifft eine Vorrichtung zum Befestigen von Bauteilen an einem Profilabschnitt mittels Befestigungsschrauben und Muttern, bei der der Profilabschnitt mindestens zwei senkrecht zueinander stehende Kantenseiten und mindestens eine Lochreihe mit Löchern aufweist, insbesondere für Schaltschränke.

Vorrichtungen dieser Art sind z.B. der DE-OS 1 753 038 und der DE-OS 2 654 239 entnehmbar. Dabei ist die Lochreihe in einem an einem geschlossenen Hohlprofilabschnitt angeformten, abstehenden Schenkel eingebracht, so dass Bauteile in herkömmlicher Weise mit handelsüblichen Befestigungsschrauben und Muttern an dem Profilabschnitt angeschraubt werden können. Eine Befestigung an den senkrecht aufeinanderstossenden Kantenseiten des Hohlprofilabschnittes ist jedoch nicht vorgesehen.

Es sind Schiebemuttern bekannt, die in eine T-Nut oder T-Aufnahme eines Profilabschnittes einschiebbar sind und die Befestigungsschrauben aufnehmen. Die Schiebemuttern sind bei dieser Befestigungsart jedoch axial nicht sicher genug unverschiebbar an dem Profilabschnitt gehalten. Ausserdem muss der Profilabschnitt durch den Schlitz geöffnet sein und kann nicht als stabiles Hohlprofil ausgebildet werden.

Es ist Aufgabe der Erfindung, eine Vorrichtung der eingangs erwähnten Art zu schaffen, mit der in einfacher Weise auch Bauteile an den senkrecht zueinander stehenden Kantenseiten eines Hohlprofilabschnittes mit Befestigungsschrauben und Muttern befestigt werden können.

Diese Aufgabe wird nach der Erfindung dadurch gelöst, dass in beide Kantenseiten gleiche Lochreihen mit gleichen quadratischen oder rechteckförmigen Löchern symmetrisch und in gleichem Abstand zu der von den beiden Kantenseiten gebildeten Kante eingebracht sind, dass in ein Loch der einen Kantenseite eine quaderförmige Steckmutter eingeführt ist, die in der in Längsrichtung des Profilabschnittes gerichteten Querschnittsabmessung gleich der zugeordneten Abmessung der Löcher ist, in der Höhe gleich oder kleiner als die quer zum Profilabschnitt gerichtete Abmessung der Löcher ist und in der die quer zum Profilabschnitt gerichtete Querschnittsabmessung um höchstens die doppelte Differenz aus dem Abstand der Lochreihen von der Kante und der Wandstärke des Profilabschnittes grösser ist als die zugeordnete Abmessung der Löcher, dass an einer Stirnseite der Steckmutter um die Gewindeaufnahme ein Steckansatz angebracht ist, der im Querschnitt und der Höhe auf die Abmessungen der Löcher ausgelegt und in das fluchtende Loch der anderen Lochreihe in der anderen Kantenseite eingesteckt ist, dass an einer in Längsrichtung des Profilabschnittes gerichteten Schmalseite der Steckmutter in einem Abstand von der Stirnseite mit dem Steckansatz, der dem Abstand der Lochreihen von der Kante entspricht, eine aus dem Loch der einen Lochreihe ragende Handhabe angeformt ist, und dass die Befestigungsschraube in die Gewindeaufnahme der in dem Loch der anderen Lochreihe unverdrehbar gehaltenen Steckmutter einschraubbar ist.

Die Steckmutter kann durch ein Loch der einen Kantenseite eingeführt und unverdrehbar in dem fluchtenden Loch der jeweils anderen, senkrecht dazu stehenden Kantenseite eingesteckt werden. Mit der Handhabe kann die Steckmutter gehalten werden, bis die Befestigungsschraube eingeschraubt ist. Es lassen sich bei der symmetrischen Ausbildung und Anordnung der Löcher im Bezug auf die Kante der beiden Kantenseiten beide Lochreihen für die Befestigung von Bauteilen ausnützen. Sollten zusätzlich Profilschenkel an dem Profilabschnitt angebracht sein, dann ergeben sich weitere Befestigungsmöglichkeiten.

Um eine ausreichende Tiefe der Gewindeaufnahme in der Steckmutter zu erhalten, sieht eine Ausgestaltung vor, dass die Höhe der Steckmutter einschliesslich des Steckansatzes der Abmessung der Löcher quer zum Profilabschnitt entspricht. Das Festhalten der Steckmutter wird durch die Handhabe erleichtert, wenn deren Auslegung so ist, dass die Handhabe bündig mit der dem Steckansatz abgekehrten Stirnseite und den beiden Längsseiten der Steckmutter abschliesst.

Ist die Verbindung hergestellt, dann kann die Handhabe von der Steckmutter entfernt werden, wenn vorgesehen ist, dass die Handhabe mit einer Sollbruchstelle versehen ist.

Das Abbrechen der Handhabe wird nach einer Ausgestaltung dadurch erleichtert, dass die Sollbruchstelle als im Querschnitt dreieckförmige Nut ausgebildet ist, wobei der spitze Nutgrund mit der zugekehrten Schmalseite der Steckmutter zusammenfällt. Die Steckmutter kann dann auch als Schiebemutter verwendet werden und zwar in einem Profilabschnitt mit einer T-Nut oder T-Aufnahme, bei der der Einführungsschlitz in der Breite auf die Abmessung des Steckansatzes an der Steckmutter ausgelegt ist.

Dabei hat sich eine Ausgestaltung bewährt, die dadurch gekennzeichnet ist, dass die Nut von der dem Steckansatz abgekehrten Stirnseite aus in die Handhabe eingebracht ist.

Für die Ausbildung des Profilabschnittes ist nach einer Ausgestaltung vorgesehen, dass der Profilabschnitt als geschlossenes Vierkantprofil ausgebildet ist, bei dem die Kantenseiten als Profilschenkel verlängert sind. Ein derartiges Hohlprofil hat sich für den Aufbau von Rahmengestellen für Schaltschränke bewährt. Der Profilabschnitt kann jedoch auch so ausgebildet sein, dass der Profilabschnitt als Vierkantprofil ausgebildet ist, bei dem eine Seite mit einem durchgehenden Schlitz versehen ist, dessen Breite der Abmessung der Löcher in den beiden Kantenseiten entspricht, oder dass der Profilabschnitt als Winkelprofil ausgebildet ist, das nur die beiden Kantenseiten mit den Lochreihen umfasst, oder dass der Profilabschnitt als U-Profil ausgebildet ist, bei dem alle drei Kantenseiten mit Lochreihen versehen sind. In jedem Falle kann die Steckmutter verwendet werden. Derartige Profile werden in einem Rahmengestell eines Schaltschrankes z.B. als Querstreben oder Tragschienen verwendet.

Die Erfindung wird anhand der Zeichnung näher erläutert. Es zeigt:

Fig. 1 in perspektivischer Ansicht einen Teil eines Profilabschnittes,

Fig. 2 in vergrösserter Draufsicht die Steckmutter,

Fig. 3 in vergrösserter Seitenansicht die Steckmutter und

Fig. 4 in perspektivischer Ansicht einen anders gestalteten Profilabschnitt.

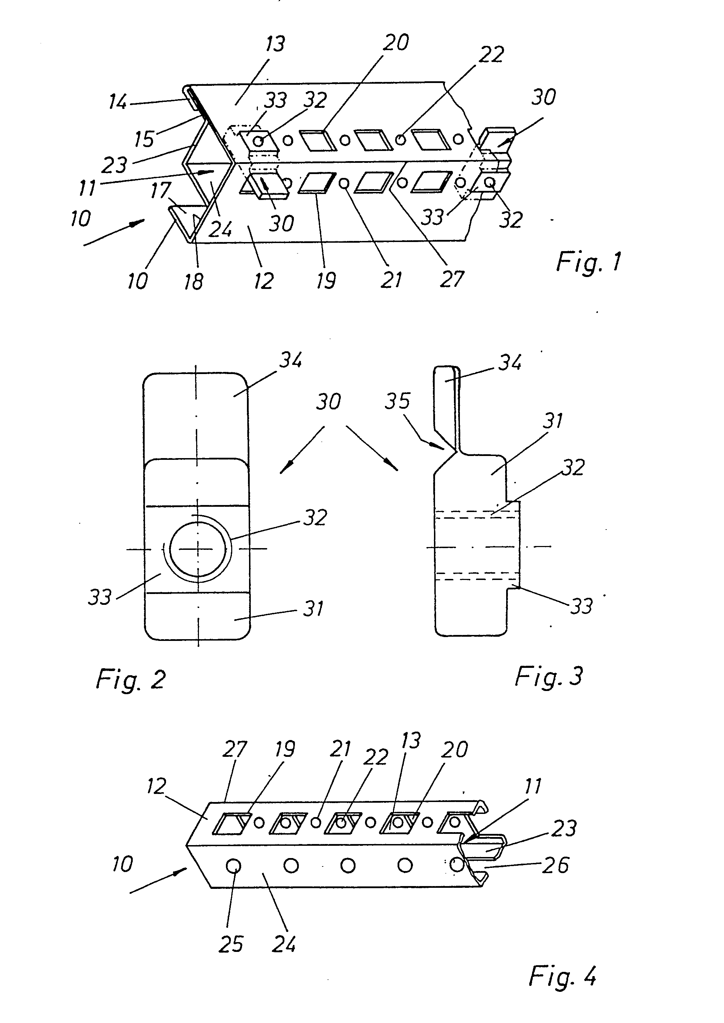

Der in Fig. 1 gezeigte Profilabschnitt 10 ist als Walzprofil hergestellt, bei dem die Kantenseiten 12 und 13 an der Kante 27 zusammenlaufen. Die Kantenseiten 12 und 13 sind verlängert und stehen an dem Vierkantprofil 11 ab, das durch die Abschnitte 23 und 24 des Walzprofils geschlossen ist und eine quadratische Innenaufnahme bildet. Der Endabschnitt 14 der Kantenseite 13 ist um den Abschnitt 15 gebogen, welcher sich an den Abschnitt 23 anschliesst. Die Kantenseite 12 ist als L-förmiger Profilschenkel verlängert, wobei der Endabschnitt 16 parallel zu dem Abschnitt 24 eingebogen ist. Der Endabschnitt 16 und der Profilschenkel sind doppellagig, wie die Abschnitte 17 und 18 zeigen. Der Profilabschnitt 10 kann in diesem Querschnitt jedoch auch als Strangpressprofil hergestellt werden.

In den Kantenseiten 12 und 13 sind im Bezug auf die Kante 27 symmetrisch und in gleichem Abstand die Lochreihen mit den quadratischen Löchern 19 und 20 angebracht, die in vorgegebener Teilung fluchten. Um eine halbe Teilung versetzt, können auf denselben Mittellinien noch zusätzlich die Befestigungsbohrungen 21 und 22 eingebracht sein, die z.B. selbstschneidende Befestigungsschrauben aufnehmen können. Sowohl in die Löcher 19 der Kantenseite 12, als auch in die Löcher 20 der Kantenseite 13 können Steckmuttern 30 nach Fig. 2 und 3 eingesetzt werden.

Wie die Fig. 2 und 3 zeigen, hat die Steckmutter 30 ein quaderförmiges Grundteil 31, dessen kleinere Querschnittsabmessung der Abmessung der Löcher 10 und 20 in Längsrichtung des Profilabschnittes 10 entspricht. An der einen Stirnseite des Grundteils 31 ist um die Gewindeaufnahme 32 der Steckansatz 33, der im Querschnitt und in der Höhe auf die Abmessungen der Löcher 19 und 20 angepasst ist. Die gesamte Höhe des Grundteils entspricht der Abmessung der Löcher 19 und 20 quer zum Profilabschnitt 10, so dass die Steckmutter 30 über ein Loch 19 und 20 in das Vierkantprofil 11 eingeführt werden kann. Die grössere Querschnittsabmessung des Grundteils 31 ist um höchstens die doppelte Differenz aus dem Abstand der Lochreihen von der Kante 27 und der Wandstärke des Profilabschnittes 10 grösser, so dass sich nach der Einführung des Steckansatzes 33 in ein Loch 20 bzw. 19 der Kantenseite 12 bzw. 13 das Grundteil 31 zweiseitig hinter dem Loch 20 bzw. 19 an der Kantenseite 12 bzw. 13 abstützt. Der Steckansatz 33 mit der Gewindeaufnahme 32 schliesst dann bündig mit der Kantenseite 12 bzw. 13 ab. Das Einsetzen der Steckmutter 30 wird durch die an einer Schmalseite des Grundteils 31 angeformte Handhabe 34 erleichtert, da darüber die Steckmutter 30 beim Einführen und Einsetzen gehalten werden kann. Die Handhabe 34 muss in einem Abstand von der Vorderseite des Steckansatzes 33 entfernt angeordnet sein, der dem Abstand der Lochreihen von der Kante 27 entspricht. Der Abstand wird dabei von der der Kante 27 benachbarten Seite der Löcher 19 und 20 aus gemessen. Die Handhabe 34 ragt bei eingeführter und eingesetzter Steckmutter 30 aus dem Loch 20 bzw. 19 heraus, so dass sie auch während des Einschraubens der Befestigungsschraube noch gehalten werden kann.

Die Handhabe 34 schliesst mit den beiden Längsseiten und mit der dem Steckansatz 33 abgekehrten Stirnseite der Steckmutter 30 bündig ab. Auf dieser Stirnseite ist an der Handhabe die Sollbruchstelle 35 angebracht, damit nach dem Herstellen der Verbindung die Handhabe 34 von dem Grundteil 31 abgetrennt werden kann. Die Sollbruchstelle 35 ist als im Querschnitt dreieckförmige Nut ausgebildet, die mit ihrem spitzen Nutgrund auf die zugekehrte, in Längsrichtung des Profilabschnittes 10 gerichtete Schmalseite des Grundteils 31 ausgerichtet ist. Bei abgebrochener Handhabe 34 kann die Steckmutter 30 daher auch als Schiebemutter für einen Profilabschnitt nach Fig. 4 verwendet werden. Der Schlitz 26 in der Seite 23 hat dabei eine Breite, die der Abmessung des quadratisch auszubildenden Steckansatzes 33 entspricht. Die Kantenseiten 12 und 13 des Profilabschnittes 10 haben wieder dieselben Lochreihen mit den quadratischen Löchern 19 und 20, sowie den Bohrungen 21 und 22. Die Innenaufnahme 11 entspricht im Querschnitt der Innenaufnahme des Vierkantprofils 10 nach Fig. 1. In der Kantenseite 24 können z.B. nur Bohrungen 25 in gleicher Teilung wie die Löcher 19 und 20 in den Kantenseiten 12 und 13 eingebracht sein. Die Steckmutter 30 nach Fig. 2 und 3 kann bei dem Profilabschnitt 10 nach Fig. 4 in ein Loch 20 oder ein Loch 19 eingeführt und in einem Loch 19 oder Loch 20 unverdrehbar festgehalten werden. Ausserdem kann die Steckmutter 30 ohne Handhabe 34 als Schiebemutter in der Innenaufnahme 11 verschoben werden, wobei der Steckansatz 33 in dem Schlitz 26 geführt ist.

Die Steckmutter 30 lässt sich auch für Profilabschnitte verwenden, die als Winkel- oder U-Profil ausgebildet sind. Wichtig ist nur, dass mindestens zwei Kantenseiten senkrecht zueinander stehen und mit gleichen Lochreihen versehen sind, die zur zugeordneten Kante symmetrisch angeordnet sind.

Die Löcher 19 und 20 können auch rechteckförmigen Querschnitt aufweisen, wobei die grössere Abmessung vorzugsweise in Längsrichtung des Profilabschnittes 10 gerichtet ist. Die Steckmutter 30 ist mit dem quaderförmigen Grundteil 31 und dem Steckansatz 33 dann mit der zugeordneten Abmessung auf diese grössere Abmessung der Löcher 19 und 20 ausgelegt, wie die Fig. 2 und 3 erkennen lassen.

## Patentansprüche

1. Vorrichtung zum Befestigen von Bauteilen an einem Profilabschnitt (10) mittels Befestigungsschrauben und Muttern, bei der der Profilabschnitt (10) mindestens zwei senkrecht zueinander stehende Kantenseiten (12, 13) und mindestens eine Lochreihe mit Löchern (19, 20) aufweist, insbesondere für Schaltschränke, dadurch gekennnzeichnet,

dass in beide Kantenseiten (12, 13) gleiche Lochreihen mit gleichen quadratischen oder rechteckförmigen Löchern (19, 20) symmetrisch und in gleichem Abstand zu der von den beiden Kantenseiten (12, 13) gebildeten Kante (27) eingebracht sind,

dass in ein Loch (z. B. 19) der einen Kantenseite (12) eine quaderförmige Steckmutter (30) eingeführt ist, die in der in Längsrichtung des Profilabschnittes (10) gerichteten Querschnittsabmessung gleich der zugeordneten Abmessung der Löcher (19, 20) ist, in der Höhe gleich oder kleiner als die quer zum Profilabschnitt (10) gerichtete Abmessung der Löcher (19, 20) ist und in der die quer zum Profilabschnitt (10) gerichtete Querschnittsabmessung um höchstens die doppelte Differenz aus dem Abstand der Lochreihen von der Kante (27) und der Wandstärke des Profilabschnittes (10) grösser ist als die zugeordnete Abmessung der Löcher (19, 20),

dass an einer Stirnseite der Steckmutter (30) um die Gewindeaufnahme (32) ein Steckansatz (33) angebracht ist, der im Querschnitt und der Höhe auf die Abmessungen der Löcher (19, 20) ausgelegt und in das fluchtende Loch (20) der anderen Lochreihe in der anderen Kantenseite (13) eingesteckt ist,

dass an einer in Längsrichtung des Profilabschnittes (10) gerichteten Schmalseite der Steckmutter (30) in einem Abstand von der Stirnseite mit dem Stckansatz (33), der dem Abstand der Lochreihen von der Kante (27) entspricht, eine aus dem Loch (19) der einen Lochreihe ragende Handhabe (34) angeformt ist, und dass die Befestigungsschraube in die Gewindeaufnahme (32) der in dem Loch (20) der anderen Lochreihe unverdrehbar gehaltenen Steckmutter (30) einschraubbar ist.

2. Vorrichtung nach Anspruch 1, dadurch gekennzeichnet, dass die Höhe der Steckmutter (30) einschliesslich des Steckansatzes (33) der Abmessung der Löcher (19, 20) quer zum Profilabschnitt (10) entspricht.

3. Vorrichtung nach Anspruch 1 oder 2, dadurch gekennzeichnet, dass die Handhabe (34) bündig mit der dem Steckansatz (33) abgekehrten Stirnseite und den beiden Längsseiten der Steckmutter (30) abschliesst.

4. Vorrichtung nach einem der Ansprüche 1 bis 3, dadurch gekennzeichnet, dass die Handhabe (34) mit einer Sollbruchstelle (35) versehen ist.

5. Vorrichtung nach Anspruch 4, dadurch gekennzeichnet, dass die Sollbruchstelle (35) als im Querschnitt dreieckförmige Nut ausgebildet ist, wobei der spitze Nutgrund mit der zugekehrten Schmalseite der Steckmutter (30) zusammenfällt.

6. Vorrichtung nach Anspruch 4 und 5, dadurch gekennzeichnet, dass die Nut von der dem Steckansatz (33) abgekehrten Stirnseite aus in die Handhabe (34) eingebracht ist.

7. Vorrichtung nach einem der Ansprüche 1 bis 6, dadurch gekennzeichnet, dass der Profilabschnitt (10) als geschlossenes Vierkantprofil ausgebildet ist, bei dem die Kantenseiten (12, 13) als Profilschenkel verlängert sind.

8. Vorrichtung nach einem der Ansprüche 1 bis 6, dadurch gekennzeichnet, dass der Profilabschnitt (10) als Vierkantprofil ausgebildet ist, bei dem eine Seite (23) mit einem durchgehenden Schlitz (26) versehen ist, dessen Breite der Abmessung der Löcher (19, 20) in den beiden Kantenseiten (12, 13) entspricht.

9. Vorrichtung nach einem der Ansprüche 1 bis 6, dadurch gekennzeichnet, dass der Profilabschnitt als Winkelprofil ausgebildet ist, das nur die beiden Kantenseiten (12, 13) mit den Lochreihen umfasst.

10. Vorrichtung nach einem der Ansprüche 1 bis 6, dadurch gekennzeichnet, dass der Profilabschnitt als U-Profil ausgebildet ist, bei dem alle drei Kantenseiten mit Lochreihen versehen sind.

## Claims

1. A divice for fixing components onto a profile section (10) using fixing screws and socket nuts, so that the profile section (10) shows at least two side edges (12, 13) standing perpendicularly to each other and at least one row of holes with holes (19, 20), specially for control cabinets, characterized by the fact,

that the same row of holes with the same quadratic- or rectangular-shaped holes (19, 20) are symmetrically present in both side edges (12, 13) at the same distance as that of the edge (27) formed by both side edges (12, 13),

that in one hole (e.g. 19), into which is introduced a quadratically-shaped socket nut (30) on one side edge (12), which is equal to the allocated measurements of the holes (19, 20) in the cross-sectional dimension pertaining to the longitudinal direction of the profile section (10), where the height is equal to or smaller than measurement of the holes (19, 20) taken laterally to the side edge (10) and in which the cross-sectional dimensions taken laterally to the profile edge are at the most double the difference of the distance between the row of holes and the edge (27) and the wall thickness of the profile section (10) is bigger than the allocated measurements of the holes (19, 20), that a socket piece (33) is positioned at a face of the socket nut (30) around the thread location (32), which is arranged according to the measurements of the holes (19, 20) regarding the cross-section and height and which is inserted into the flushed hole (20) in the other row of holes on the other side edge (13),

that a handle (34), which protrudes from the hole of the one row of holes, is attached to a narrow cant of the socket nut (30) in the longitudinal direction of the profile section (10) at a distance from the face with the socket piece (33), which corresponds to the distance between the row of holes and the edge (27), and

that the fixing screw is screwable into the thread location (32) which is located in the socket nut (30) stuck non-rotatably in the hole (20) of the other row of holes.

2. Device according to claim 1, characterized by the fact, that the height of the socket nut (30) including the socket piece (33) corresponds to the measurements of the holes (19, 20) lateral to the profile section (10).

3. Device according to claim 1 or 2, characterized by the fact, that the handle (34) is finished off flush to the face facing away from the socket piece (33) and both longitudinal sides of the socket nut (30).

4. Device according to one of the claims 1 to 3, characterized by the fact, that the handle (34) has a pre-determined breacking point (35).

5. Device according to claim 4, characterized by the fact, that the pre-determined breaking point (35) is formed as a triangular groove in cross-section, where the pointed groove in cross-section, where the pointed groove bottom coincides with the facing narrow cant of the socket nut (30).

6. Device according to claims 4 and 5, characterized by the fact, that the groove is built in to the handle (34) from the face which faces away from the socket piece (33).

7. Device according to one of the claims 1 to 6, characterized by the fact, that the profile section (10) is formed as a closed square profile, with the side edges (12, 13) extended as profile sides.

8. Device according to one of the claims 1 to 6, characterized by the fact, that the profile section (10) is formed as a square profile, with one side (23) equipped with a continuous slot (26), the width of which corresponds to the measurements of the holes (19, 20) on both side edges (12, 13).

9. Device according to one of the claims 1 to 6, characterized by the fact, that the profile section is formed as a corner iron, that only encompasses the two side edges (12, 13) with the rows of holes.

10. Device according to one of the claims 1 to 6, characterized by the fact, that the profile section is formed as a U-profile, where all three side edges are equipped with rows of holes.

## Revendications

1. Dispositif pour la fixation de composants sur un tronçon (10) de profilé, à l'aide de vis de fixation et d'écrous, dans lequel le tronçon (10) de profilé présente au moins deux faces (12, 13) formment une arête et mutuellement perpendiculaires, et au moins une rangée de trous (19, 20), en particulier pour des armoires de commutation, dispositif caractérisé en ce que,

dans les deux faces (12, 13) sont ménagées des rangées identiques de trous (19, 20) carrées ou rectangulaires identiques, placées symétriquement et à la même distance de l'arête (27) formée par les deux faces (12, 13), en ce que dans un trou (par exemple 19) d'une face (12) est introduit un écrou (30) insérable, de forme quadrangulaire, dont la dimension transversale, dans le sens longitudinal du tronçon (10) de profilé, est égale à la dimension associée des trous (19, 20), dont la hauteur est égale ou inférieure à la dimension des trous (19, 20) dans le sens perpendiculaire au tronçon (10) de profilé et dont la dimension transversale, dans le sens perpendiculaire au tronçon (10) de profilé, est supérieure d'au maximum le double de la différence entre la distance des rangées de trous par rapport à l'arête (27) et l'épaisseur de paroi du tronçon (10) de profilé, à la dimension associée des trous (19, 20),

en ce qu'un côté frontal de l'écrou (30) insérable comporte, autour du logement (32) taraudé, une saillie (33) dont la section et la hauteur sont adaptées aux dimensions correspondantes des trous (19, 20) et qui est insérée dans le trou (20) affleurant de l'autre série de trous ménagée dans l'autre face (13),

en ce qu'il y a, sur un petit côté, dirigé dans le sens longitudinal du tronçon (10) de profilé, de l'écrou (30) à une distance du côté frontal comportant la saillie (33) correspondant à la distance de la rangée des trous par rapport à l'arête (27), une poignée (34) faisant saillie du trou (19) d'une des rangées de trous, et

en ce que la vis de fixation peut être vissée dans le logement (32) taraudé de l'écrou (30) maintenu, sans pouvoir tourner, dans le trou (20) de l'autre rangée de trous.

2. Dispositif selon la revendication 1, caractérisé en ce que la hauteur de l'écrou (30) insérable, y compris la saillie (33), correspond à la dimension des trous (19, 20) transversalement au tronçon (10) de profilé.

3. Dispositif selon la revendication 1 ou 2, caractérisé, en ce que la poignée (34) se termine en affleurant le côté frontal éloigné de la saillie (33) et les deux côtés longitudinaux de l'écrou (30) inséré.

4. Dispositif selon l'une des revendications 1 à 3, caractérisé, en ce que la poignée (34) comporte un point ou une zone (35) destiné à une rupture.

5. Dispositif selon la revendication 4, caractérisé, en ce que la zone (35) destinée à une rupture a la forme d'une rainure de section triangulaire, dont le fond pointu coïncide avec le petit côté adjacent de l'écrou (30) insérable.

6. Dispositif selon l'une des revendications 4 et 5, caractérisé en ce que la rainure est ménagée dans la poignée (34) à partir du côté frontal éloigné de la saillie (33).

7. Dispositif selon l'une quelconque des revendications 1 à 6, caractérisé en ce que le tronçon (10) de profilé est réalisé en forme de profilé quadrangulaire fermé, dans lequel les faces (12, 13) de formation d'arête sont prolongées en constituant des ailes du profilé.

8. Dispositif selon l'une des revendications 1 à 6, caractérisé, en ce que le tronçon (10) de profilé a la forme d'un profilé quadrangulaire, dans lequel un côté (23) comporte une fente (26) continue, dont la largeur correspond à la dimension des trous (19, 20) ménagés dans les deux faces (12, 13).

9. Dispositif selon l'une des revendication 1 à 6, caractérisé en ce que le tronçon de profilé est en forme de cornière ne comportant que les deux côtés ou faces (12, 13) avec les rangées de trous.

10. Dispositif selon l'une des revendications 1 à 6, caractérisé en ce que le tronçon (10) de profilé a la forme d'un profilé en U, dans lequel les trois faces comportent des rangées de trous.

Fig. 1

Fig. 2

Fig. 3

Fig. 4